# EUROPEAN PATENT APPLICATION

(11) **EP 4 742 566 A1**
(43) Date of publication of application: **13.05.2026**
(21) Application number: 23946985.1
(22) Date of filing: 29.07.2023
(51) Int. Cl.: H04L 1/00

(54) **RATE MATCHING METHOD, AND COMMUNICATION APPARATUS**

(71) Applicant: Huawei Technologies Co., Ltd., Shenzhen, Guangdong 518129 (CN)
(72) Inventor: LIU, Yong, Shenzhen, Guangdong 518129 (CN); BI, Xiaoyan, Shenzhen, Guangdong 518129 (CN); JIANG, Chenglong, Shenzhen, Guangdong 518129 (CN)
(74) Representative: Goddar, Heinz J.
(86) International application number: PCT/CN2023/110060
(87) International publication number: WO 2025/025029

(57) **Abstract**

This application provides a rate matching method and a communication apparatus. In the method, a network device binds different rate matching mechanisms to a terminal device for different frequency domain resources. Rate matching information indicates a position of a time-frequency resource that is in a corresponding frequency domain resource and that is not used for data transmission. The terminal device may perform rate matching on different frequency domain resources based on different rate matching information. The method can ensure that the terminal device can perform differentiated rate matching in different bandwidths, to implement more accurate data demodulation, thereby improving receiving performance of the terminal device.

## Description

### TECHNICAL FIELD

This application relates to the wireless communication field, and specifically, to a rate matching method and a communication apparatus.

### BACKGROUND

In a multi-user multiple-input multiple-output (multi-user multiple-input multiple-output, MU-MIMO) scenario, a base station simultaneously communicates with a plurality of terminals. Before performing data demodulation based on a received demodulation reference signal (demodulation reference signal, DMRS), a terminal #1 needs to perform rate matching. Specifically, in addition to a DMRS port of the terminal #1, the terminal #1 usually needs to know a DMRS port of another jointly scheduled terminal, to determine, based on the DMRS port of the terminal #1 and the DMRS port of the another jointly scheduled terminal and resource mapping information corresponding to the DMRS ports, specific resource elements (resource elements, REs) occupied in a current transmission slot, that is, specific REs that are not used for transmission of data of the terminal #1. If the terminal #1 cannot obtain the information, the terminal #1 demodulates a DMRS of another terminal as the data of the terminal #1. In this case, a decoding error is caused.

To implement DMRS rate matching of the plurality of terminals, a standard provides an explicit signaling indication manner. The base station may indicate, to the terminal #1, code division multiplexing (code division multiplexing, CDM) group information corresponding to the DMRS ports of the terminal #1 and the another jointly scheduled terminal in the current transmission slot. The CDM group information may be used to determine specific REs that are occupied by the DMRS ports of the terminal #1 and the another jointly scheduled terminal in the current transmission slot.

In the foregoing DMRS rate matching scheme, the CDM group information and DMRS port information of the terminal are configured simultaneously. Because the DMRS port information is configured in a DMRS port configuration periodicity, and a corresponding scheduling bandwidth is fixed, a scheduling bandwidth corresponding to the indication of the CDM group information is also fixed. When only a conventional MIMO service exists in a system, the terminal #1 may perform rate matching in the corresponding scheduling bandwidth based on the indicated CDM group information. However, in a service convergence scenario (in other words, a plurality of services coexist), bandwidths used for different services may be different. In this case, how to perform rate matching is an urgent problem to be resolved.

### SUMMARY

This application provides a rate matching method and a communication apparatus. The method can ensure that differentiated rate matching can be performed in different bandwidths, to implement more accurate data demodulation, thereby improving receiving performance of a device.

According to a first aspect, a communication method is provided. The method may be performed by a receiver device, or may be performed by a component (for example, a chip or a circuit) of the receiver device. This is not limited. For ease of description, an example in which the method is performed by the receiver device is used for description below.

The method may include: The receiver device receives first indication information and second indication information, where the first indication information indicates a first frequency domain resource, the second indication information indicates a second frequency domain resource, and the first frequency domain resource and the second frequency domain resource do not overlap. The receiver device receives first rate matching information associated with the first frequency domain resource and second rate matching information associated with the second frequency domain resource, where the first rate matching information indicates a position of a time-frequency resource that is in a first time-frequency resource and that is not used for data transmission, the second rate matching information indicates a position of a time-frequency resource that is in a second time-frequency resource and that is not used for data transmission, the first time-frequency resource includes a first time domain resource and the first frequency domain resource, and the second time-frequency resource includes the first time domain resource and the second frequency domain resource.

In the foregoing technical solution, a transmitter device may bind, to the receiver device for different frequency domain resources, rate matching information corresponding to the frequency domain resources. The method can ensure that a terminal device can perform differentiated rate matching in different bandwidths, to implement more accurate data demodulation, thereby improving receiving performance of the terminal device.

In some implementations of the first aspect, the method further includes: The receiver device performs rate matching on each time-frequency unit in the first time-frequency resource based on the first rate matching information, where the first time-frequency resource includes the first time domain resource and the first frequency domain resource. The receiver device performs rate matching on each time-frequency unit in the second time-frequency resource based on the second rate matching information, where the second time-frequency resource includes the first time domain resource and the second frequency domain resource.

In some implementations of the first aspect, the first rate matching information indicates that no time-frequency resource in the first time-frequency resource is used for data transmission.

The foregoing technical solution provides a simple rate matching scheme, and the terminal device considers that no data transmission is performed on a frequency domain resource spatially multiplexed by different types of signals.

In some implementations of the first aspect, the first rate matching information indicates a position of a time-frequency resource for transmission of a first reference signal and a second reference signal on the first time-frequency resource, the second rate matching information indicates a position of a time-frequency resource for transmission of the first reference signal on the second time-frequency resource, the first reference signal is a first type of signal, and the second reference signal is a second type of signal.

The foregoing technical solution provides a specific application scenario in which differentiated rate matching is performed on the first frequency domain resource and the second frequency domain resource.

In some implementations of the first aspect, the first rate matching information includes first mapping information and third indication information, the first mapping information indicates a position of a time-frequency resource available for transmission of the first reference signal and a position of a time-frequency resource available for transmission of the second reference signal that correspond to the first time-frequency resource, and the third indication information indicates a position of a time-frequency resource actually used for transmission of the first reference signal and a position of a time-frequency resource actually used for transmission of the second reference signal that are in the time-frequency resources indicated by the first mapping information.

It should be understood that, if transmission of a reference signal is performed on a time-frequency resource, the time-frequency resource is unavailable for data transmission. In the foregoing technical solution, a specific design solution of the first rate matching information is provided. The first mapping information indicates the positions of the time-frequency resources that are available for transmission of the first reference signal and the second reference signal and that are in the first frequency domain resource, and the third indication information indicates the positions that are of the time-frequency resources actually used for transmission of the first reference signal and the second reference signal and that are in the positions of the time-frequency resources available for transmission of the first reference signal and the second reference signal. Therefore, the receiver device can determine, based on the first mapping information and the third indication information, information about a position of a time-frequency resource that is in the first frequency domain resource and that is unavailable for data transmission.

In some implementations of the first aspect, the second rate matching information includes second mapping information and fourth indication information, the second mapping information indicates a position that is of a time-frequency resource available for transmission of the first reference signal and that corresponds to the second time-frequency resource, and the fourth indication information indicates a position of a time-frequency resource that is actually used for transmission of the first reference signal and that is in the time-frequency resource indicated by the second mapping information.

In some implementations of the first aspect, the first mapping information indicates a pattern of the first reference signal and a pattern of the second reference signal, the pattern of the first reference signal indicates a position of a time-frequency resource that is available for transmission of the first reference signal and that is in a resource grid included in the first time domain resource, and the pattern of the second reference signal indicates a position of a time-frequency resource that is available for transmission of the second reference signal and that is in a resource grid included in the first time domain resource, where the pattern of the first reference signal is the same as the pattern of the second reference signal; or the pattern of the first reference signal is different from the pattern of the second reference signal.

In some implementations of the first aspect, when the pattern of the first reference signal is different from the pattern of the second reference signal and positions of time-frequency resources available for transmission of the reference signals in the two patterns collide, the first mapping information further includes a first rule, a second rule, or a third rule, where the first rule indicates to keep the pattern of the first reference signal unchanged, and indicates that a colliding position in the pattern of the second reference signal is unavailable for transmission of the second reference signal; the second rule indicates to keep the pattern of the second reference signal unchanged, and indicates that a colliding position in the pattern of the first reference signal is unavailable for transmission of the first reference signal; and the third rule indicates to map the pattern of the first reference signal or the pattern of the second reference signal in a staggered manner, to avoid a collision between positions occupied by all ports supported by two patterns after mapping-based adjustment according to the third rule.

In the foregoing technical solution, three possible rules for eliminating a pattern collision are provided. When the pattern of the first reference signal received by the receiver device collides with the pattern of the second reference signal received by the receiver device, the receiver device may first eliminate the pattern collision according to a provided rule, and then determine, based on a pattern obtained through the collision elimination, the positions of the time-frequency resources that are in the first time-frequency resource and that are actually used for transmission of the first reference signal and the second reference signal.

In some implementations of the first aspect, the first reference signal and the second reference signal are demodulation reference signals DMRSs.

In some implementations of the first aspect, the frequency domain resource that is in the first frequency domain resource and that is used for spatial multiplexing transmission of the first type of signal and the second type of signal is contiguous or non-contiguous in frequency domain.

According to a second aspect, a communication method is provided. The method may be performed by a transmitter device, or may be performed by a component (for example, a chip or a circuit) of the transmitter device. This is not limited. For ease of description, an example in which the method is performed by the transmitter device is used for description below.

The method may include: The transmitter device sends first indication information and second indication information, where the first indication information indicates a first frequency domain resource, the second indication information indicates a second frequency domain resource, and the first frequency domain resource and the second frequency domain resource do not overlap. The transmitter device sends first rate matching information associated with the first frequency domain resource and second rate matching information associated with the second frequency domain resource, where the first rate matching information indicates a position of a time-frequency resource that is in a first time-frequency resource and that is not used for data transmission, the second rate matching information indicates a position of a time-frequency resource that is in a second time-frequency resource and that is not used for data transmission, the first time-frequency resource includes a first time domain resource and the first frequency domain resource, and the second time-frequency resource includes the first time domain resource and the second frequency domain resource.

For beneficial effects of the second aspect, refer to the descriptions of the first aspect. Details are not described herein again.

In some implementations of the second aspect, the first rate matching information indicates that no time-frequency resource in the first time-frequency resource is used for data transmission.

In some implementations of the second aspect, the first rate matching information indicates a position of a time-frequency resource for transmission of a first reference signal and a second reference signal on the first time-frequency resource, the second rate matching information indicates a position of a time-frequency resource for transmission of the first reference signal on the second time-frequency resource, the first reference signal is a first type of signal, and the second reference signal is a second type of signal.

In some implementations of the second aspect, the first rate matching information includes first mapping information and third indication information, the first mapping information indicates a position of a time-frequency resource available for transmission of the first reference signal and a position of a time-frequency resource available for transmission of the second reference signal that correspond to the first time-frequency resource, and the third indication information indicates a position of a time-frequency resource actually used for transmission of the first reference signal and a position of a time-frequency resource actually used for transmission of the second reference signal that are in the time-frequency resources indicated by the first mapping information.

In some implementations of the second aspect, the second rate matching information includes second mapping information and fourth indication information, the second mapping information indicates a position that is of a time-frequency resource available for transmission of the first reference signal and that corresponds to the second time-frequency resource, and the fourth indication information indicates a position of a time-frequency resource that is actually used for transmission of the first reference signal and that is in the time-frequency resource indicated by the second mapping information.

In some implementations of the second aspect, the first mapping information indicates a pattern of the first reference signal and a pattern of the second reference signal, the pattern of the first reference signal indicates a position of a time-frequency resource that is available for transmission of the first reference signal and that is in a resource grid included in the first time domain resource, and the pattern of the second reference signal indicates a position of a time-frequency resource that is available for transmission of the second reference signal and that is in a resource grid included in the first time domain resource, where the pattern of the first reference signal is the same as the pattern of the second reference signal; or the pattern of the first reference signal is different from the pattern of the second reference signal.

In some implementations of the second aspect, when the pattern of the first reference signal is different from the pattern of the second reference signal and positions of time-frequency resources available for transmission of the reference signals in the two patterns collide, the first mapping information further includes a first rule, a second rule, or a third rule, where the first rule indicates to keep the pattern of the first reference signal unchanged, and indicates that a colliding position in the pattern of the second reference signal is unavailable for transmission of the second reference signal; the second rule indicates to keep the pattern of the second reference signal unchanged, and indicates that a colliding position in the pattern of the first reference signal is unavailable for transmission of the first reference signal; and the third rule indicates to map the pattern of the first reference signal or the pattern of the second reference signal in a staggered manner, to avoid a collision between positions occupied by all ports supported by two patterns after mapping-based adjustment according to the third rule.

In some implementations of the second aspect, the first reference signal and the second reference signal are demodulation reference signals DMRSs.

In some implementations of the second aspect, the frequency domain resource that is in the first frequency domain resource and that is used for spatial multiplexing transmission of the first type of signal and the second type of signal is contiguous or non-contiguous in frequency domain.

According to a third aspect, a communication apparatus is provided. The apparatus is configured to perform the method provided in the first aspect. Specifically, the apparatus may include a unit and/or a module, for example, a processing unit and/or a communication unit, configured to perform the method in any one of the first aspect or the possible implementations of the first aspect.

In an implementation, the apparatus is a receiver device. When the apparatus is the receiver device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a receiver device. When the apparatus is the chip, the chip system, or the circuit used in the receiver device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fourth aspect, a communication apparatus is provided. The apparatus is configured to perform the method provided in the second aspect. Specifically, the apparatus may include a unit and/or a module, for example, a processing unit and/or a communication unit, configured to perform the method in any one of the second aspect or the possible implementations of the second aspect.

In an implementation, the apparatus is a transmitter device. When the apparatus is the transmitter device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a transmitter device. When the apparatus is the chip, the chip system, or the circuit used in the transmitter device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus is provided. The apparatus includes at least one processor. The at least one processor is coupled to at least one memory, the at least one memory is configured to store a computer program or instructions, and the at least one processor is configured to: invoke the computer program or the instructions from the at least one memory, and run the computer program or the instructions, to enable the communication apparatus to perform the method in any one of the first aspect or the possible implementations of the first aspect.

In an implementation, the apparatus is a receiver device.

In another implementation, the apparatus is a chip, a chip system, or a circuit used in a receiver device.

According to a sixth aspect, a communication apparatus is provided. The apparatus includes at least one processor. The at least one processor is coupled to at least one memory, the at least one memory is configured to store a computer program or instructions, and the at least one processor is configured to: invoke the computer program or the instructions from the at least one memory, and run the computer program or the instructions, to enable the communication apparatus to perform the method in any one of the second aspect or the possible implementations of the second aspect.

In an implementation, the apparatus is a transmitter device.

In another implementation, the apparatus is a chip, a chip system, or a circuit used in a transmitter device.

According to a seventh aspect, a processor is provided, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code executed by a device, and the program code is used to perform the method in any one of the first aspect or the possible implementations of the first aspect or the method in any one of the second aspect or the possible implementations of the second aspect.

According to a ninth aspect, a computer program product including instructions is provided. When the computer program product runs on a computer, the computer is enabled to perform the method in any one of the first aspect or the possible implementations of the first aspect or the method in any one of the second aspect or the possible implementations of the second aspect.

According to a tenth aspect, a chip is provided. The chip includes a processor and a communication interface, and the processor reads, through the communication interface, instructions stored in a memory, to perform the method in any one of the first aspect or the possible implementations of the first aspect or the method in any one of the second aspect or the possible implementations of the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method in any one of the first aspect or the possible implementations of the first aspect or the method in any one of the second aspect or the possible implementations of the second aspect.

According to an eleventh aspect, a communication system is provided. The communication system includes the communication apparatus shown in the fifth aspect and the communication apparatus shown in the sixth aspect.

### BRIEF DESCRIPTION OF DRAWINGS

FIG. 1 is a diagram of a wireless communication system 100 applicable to an embodiment of this application;
FIG. 2 shows DMRS patterns of two configuration types;
FIG. 3 is a diagram of MU-MIMO spatial multiplexing in an RIS-MIMO system;
FIG. 4 is a diagram of MU-MIMO spatial multiplexing in an ISAC MIMO system;
FIG. 5 is a schematic flowchart of a rate matching method according to an embodiment of this application;
FIG. 6 is a diagram of a pattern of a second reference signal according to an embodiment of this application;
FIG. 7 is a diagram of positions of REs that are not used for data transmission in a resource grid and that are determined based on first rate matching information according to an embodiment of this application;
FIG. 8 is a diagram of performing rate matching on a first time-frequency resource according to an embodiment of this application;
FIG. 9 is a diagram of another pattern of a second reference signal according to an embodiment of this application;
FIG. 10 is a diagram of a new reference signal pattern obtained through modifying a pattern of a second reference signal according to a first rule;
FIG. 11 is a diagram of a new reference signal pattern obtained through modifying a pattern of a first reference signal according to a second rule;
FIG. 12 is a diagram of a new reference signal pattern obtained through modifying a pattern of a second reference signal according to a third rule;
FIG. 13 is a diagram of positions of REs that are not used for data transmission in a resource grid and that are determined based on first rate matching information according to an embodiment of this application;
FIG. 14 is another diagram of performing rate matching on a first time-frequency resource according to an embodiment of this application;
FIG. 15 is a diagram of a gNB monostatic scenario in an integrated sensing and communication MIMO spatial multiplexing system;
FIG. 16 is a diagram of a gNB bistatic scenario in an integrated sensing and communication MIMO spatial multiplexing system;
FIG. 17 is a block diagram of a communication apparatus 200 according to an embodiment of this application; and
FIG. 18 is a block diagram of a communication apparatus 300 according to an embodiment of this application.

### DESCRIPTION OF EMBODIMENTS

Technical solutions of this application are described below with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th Generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. This is not limited in this application.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, a home NodeB, or an HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; may be a gNB or a transmission point (TRP or TP) in a 5G system like an NR system, one or one group (including a plurality of antenna panels) of antenna panels of a base station in a 5G system; or may be a network node constructing a gNB or a transmission point, for example, a baseband unit (BBU) or a distributed unit (distributed unit, DU), or a base station in a next generation 6G communication system.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (internet of things, IoT) system. IoT is an important part of future information technology development. A main technical feature of the IoT is to connect an object to a network by using a communication technology, to implement an intelligent network for human-machine interconnection and thing-thing interconnection. An IoT technology may implement massive connections, deep coverage, and terminal power saving by using, for example, a narrowband (narrowband) NB technology.

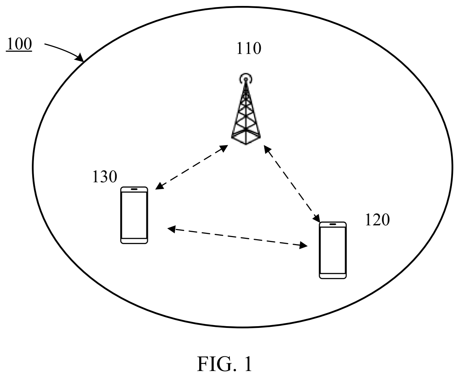

FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal devices may directly communicate with each other.

When the network device communicates with the terminal device, the network device may manage at least one cell, and there may be at least one terminal device in one cell. Optionally, the network device 110 and the terminal device 120 form one single-cell communication system. Without loss of generality, the cell is referred to as a cell #1. The network device 110 may be a network device in the cell #1, or the network device 110 may serve a terminal device (for example, the terminal device 120) in the cell #1.

It should be noted that, the cell may be understood as an area within coverage of a radio signal of the network device.

It may be understood that FIG. 1 is merely a simplified diagram of an example for ease of understanding. The wireless communication system 100 may further include another network device or may further include another terminal device, which is not shown in FIG. 1. Embodiments of this application are applicable to any communication scenario in which the network device communicates with the terminal device. For example, embodiments of this application may be applied to downlink communication, and may also be applied to uplink communication. In downlink communication, the network device serves as a transmitter, the terminal device serves as a receiver, and the network device may send a downlink reference signal and downlink data to the terminal device. In uplink communication, the terminal device serves as a transmitter, the network device serves as a receiver, and the terminal device may send an uplink reference signal and uplink data to the network device.

The following provides several descriptions of this application.
(1) "Sending" and "receiving" in embodiments of this application represent signal transmission directions. For example, "sending information to XX" may be understood as that a destination end of the information is the XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.
   In other words, sending and receiving may be performed between devices, for example, between a network device and a terminal device; or may be performed inside a device, for example, sending or receiving between components, modular components, chips, software modules, or hardware modules inside the device through a bus, a cable, or an interface.
   It may be understood that necessary processing, such as encoding and modulation, may be performed on the information between the source end at which the information is sent and the destination end, but the destination end may understand valid information from the source end. Similar descriptions in this application may be understood similarly. Details are not described again.
(2) In embodiments of this application, "indication" may include a direct indication and an indirect indication, or may include an explicit indication and an implicit indication. Information indicated by specific information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and a remaining part of the to-be-indicated information is known or pre-agreed on. For example, specific information may alternatively be indicated by using an arrangement sequence of pieces of information that is pre-agreed on (for example, predefined in a protocol), to reduce indication overheads to a specific extent. A specific indication manner is not limited in this application. It may be understood that, for a sender of the indication information, the indication information may indicate the to-be-indicated information, and for a receiver of the indication information, the indication information may be used for determining the to-be-indicated information.

For ease of understanding of embodiments of this application, terms in embodiments of this application are briefly described below.

### 1. Multiple-input multiple-output (multi-input multi-output, MIMO) technology

In the MIMO technology, an array gain, multiplexing and diversity gains, and a cochannel interference reduction gain in space can be obtained for a signal by using a resource in a space dimension without increasing a system bandwidth, so that a capacity and spectrum efficiency of a communication system are exponentially improved. For example, in an LTE system, the system may use a plurality of antennas at a transmitter and a receiver to support transmission of up to eight layers, so that a system capacity can be effectively improved.

### 2. Time-frequency resource

In embodiments of this application, data or information may be carried by using the time-frequency resource. The time-frequency resource may include a time domain resource and a frequency domain resource. In time domain, the time-frequency resource may include one or more time domain units (which may also be referred to as time units or time elements). In frequency domain, the time-frequency resource may include one or more frequency domain units.

In time domain, a minimum granularity is an orthogonal frequency division multiplexing (orthogonal frequency division multiplexing, OFDM) symbol. In frequency domain, a minimum granularity is a subcarrier. A time-frequency resource formed by one OFDM symbol and one subcarrier is referred to as a resource element (resource element, RE). The RE is a minimum transmission unit for signal transmission. When performing resource mapping at a physical layer, an RE is used as a basic unit.

One time domain unit may be one or more OFDM symbols, one slot (slot), one mini-slot (mini-slot), or one subframe (subframe). One slot may include seven or 14 symbols. One mini-slot may include at least one symbol (for example, two symbols, seven symbols, 14 symbols, or any number of symbols less than or equal to 14 symbols). Duration of one subframe in time domain may be 1 millisecond (ms).

One frequency domain unit may be one resource block (resource block, RB), one subcarrier (subcarrier), one resource block group (resource block group, RBG), one predefined subband (subband), one precoding resource block group (precoding resource block group, PRG), one bandwidth part (bandwidth part, BWP), one carrier, or one serving cell. It should be understood that the listed sizes of the time domain unit and the frequency domain unit are merely for ease of understanding of the solutions of this application, and do not constitute a limitation on the protection scope of this application.

### 3. Reference signal (reference signal, RS)

The reference signal may also be referred to as a pilot (pilot), a reference sequence, a reference signal, or the like. In this application, the reference signal may be a reference signal used for channel measurement and channel estimation. Reference signals are distributed on different REs in time-frequency two-dimensional space in an OFDM symbol, and have known amplitudes and phases. In a MIMO system, each transmit antenna (a virtual antenna or a physical antenna) has an independent data channel. A receiver performs channel estimation for each transmit antenna based on a known RS signal, and restores sent data based on the channel estimation. Currently, a standard has defined a plurality of types of reference signals, for example, a cell-specific reference signal (cell-specific reference signal, CRS), a demodulation reference signal (demodulation reference signal, DMRS), a channel state information-reference symbol (channel state information-reference signal, CSI-RS), and a sounding reference signal (sounding reference signal, SRS). The DMRS is used to perform channel estimation on a data channel (for example, a physical uplink shared channel (physical uplink shared channel, PUSCH) or a physical downlink shared channel (physical downlink shared channel, PDSCH)) or a control channel (for example, a physical uplink shared channel (physical uplink control channel, PUCCH) or a physical downlink shared channel (physical downlink control channel, PDCCH)), to detect and demodulate data on a corresponding channel. The CSI-RS is used to measure channel information and report information such as a channel quality indicator (channel quality indicator, CQI), a precoding matrix indicator (precoding matrix indicator, PMI), and a rank indicator (rank indicator, RI). The SRS is used to measure an uplink channel, and may estimate a downlink channel based on the uplink channel, so that a precoding matrix used for downlink transmission can be determined.

It should be understood that the foregoing listed reference signals are merely examples, and should not constitute any limitation on this application. This application does not exclude a possibility of defining another reference signal in a future protocol to implement a same or similar function.

### 4. Antenna port (antenna port)

The antenna port is referred to as a port (port) for short, and may include a transmit port (or referred to as a transmit port) and a receive port. The transmit port may be understood as a virtual antenna identified by a receiving device, a transmit antenna identified by a receiver, or a transmit antenna that can be distinguished in space. The transmit port may also be referred to as a port of a precoding reference signal. Transmission of a reference signal of each transmit port may be performed by using one or more frequency domain units. One antenna port may be configured for each virtual antenna, and each virtual antenna may be a weighted combination of a plurality of physical antennas. The receive port may be understood as a receive antenna of the receiving device. For example, in downlink transmission, the receive port may be a receive antenna of a terminal device.

Based on different carried signals, the antenna port may be classified into a reference signal antenna port (or referred to as a reference signal port or a pilot port) and a data antenna port (referred to as a data port for short). For example, the reference signal port includes but is not limited to a DMRS port and a CSI-RS port.

### 5. Rate matching (rate matching)

To avoid mutual interference between a reference signal and data from affecting channel estimation performance and data demodulation performance, a position to which the reference signal is mapped needs to be avoided when a transmitter performs data sending and mapping, to ensure that the data and the reference signal are mapped to different time-frequency resources. Correspondingly, a receiver needs to know specific time-frequency resources that are in time-frequency resources of the receiver and that are not used for data transmission, to avoid these time-frequency resources during data demodulation, so that correct data decoding is performed.

A MIMO technology is one of key technologies for 5G communication and future communication. When MIMO is used for data transmission, a receiver device may perform channel estimation based on a received reference signal (for example, a DMRS), and then demodulate the data. The following uses a DMRS as an example to describe a number of reference signal ports and a rate matching method that are currently supported by a protocol.

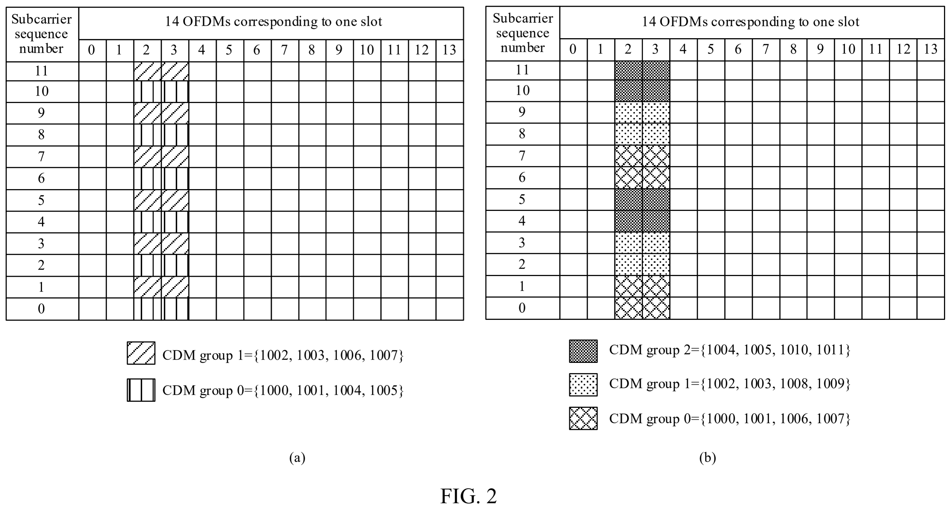

FIG. 2 shows DMRS patterns (patterns) of two configuration types. Each grid in FIG. 2 may be considered as an RE. (a) in FIG. 2 is a diagram of a DMRS pattern of a type 1. The DMRS pattern uses a comb-like and cyclic shift multiplexing manner, and supports a maximum of eight DMRS orthogonal ports, namely, 1000, 1001, 1002, 1003, 1004, 1005, 1006, and 1007. (b) in FIG. 2 is a diagram of a DMRS pattern of a type 2. The DMRS pattern uses a frequency division multiplexing and time-frequency domain code division multiplexing manner, and supports a maximum of 12 DMRS orthogonal ports, namely, 1000, 1001, 1002, 1003, 1004, 1005, 1006, 1007, 1008, 1009, 1010, and 1011. It can be learned that "dual symbols" (symbols corresponding to sequence numbers 2 and 3) are configured in the DMRS patterns of the type 1 and the type 2, and the DMRS ports occupy 24 REs in total in each RB. A difference between the two types of DMRS patterns mainly lies in a number of supported CDM groups (groups). REs of different filling patterns represent different CDM groups. Specifically, the DMRS pattern of the type 1 supports two CDM groups, and the eight DMRS ports belong to the two CDM groups (namely, a CDM group 0 and a CDM group 1). The CDM group 0 includes 1000, 1001, 1004, and 1005, and the CDM group 1 includes 1002, 1003, 1006, and 1007. The DMRS pattern of the type 2 supports three CDM groups, and the 12 DMRS ports belong to the three CDM groups (a CDM group 0, a CDM group 1, and a CDM group 2). The CDM group 0 includes 1000, 1001, 1006, and 1007. The CDM group 1 includes 1002, 1003, 1008, and 1009. The CDM group 2 includes 1004, 1005, 1010, and 1011.

In an actual data transmission process, a base station allocates a DMRS port to each UE, and indicates the DMRS port to the UE. The UE may determine, based on a DMRS pattern and information about the indicated port, a position of a DMRS resource allocated to the UE. The indication of the DMRS port may be implemented by using a port indication field in downlink control information (downlink control information, DCI). For example, the field and a port allocation result corresponding to the field are shown in Table 1. Table 1 provides only some port allocation results. For a complete table of Table 1, refer to an existing protocol. For example, when the port indication field in the DCI indicates 2, a row in which a value of a value field is 2 is found based on Table 1, and it is determined that the DMRS port allocated to the UE is the ports 1000, and 1001. It should be understood that 0, 1, 2, 3, ..., and 8 in a DMRS port in Table 1 respectively represent that DMRS ports are the ports 1000, 1001, 1002, 1003, ..., and 1008.

**Table 1**

| Value (value) | Number of CDM groups without data (num of CDM groups without data) | DMRS port (DMRS port) |
|---|---|---|
| 0 | 1 | 0 |
| 1 | 1 | 1 |
| 2 | 1 | 0 and 1 |
| 3 | 2 | 0 |
| ... | | |
| 55 | 2 | 2 and 3 |
| 56 | 2 | 6 and 7 |
| 57 | 2 | 7 and 8 |
| 58-63 | Reserved (reserved) | Reserved (reserved) |

In a multi-user multiple-input multiple-output (multi-user multiple-input multiple-output, MU-MIMO) scenario, a base station simultaneously communicates with a plurality of UEs. Before performing DMRS-based data demodulation, a UE needs to perform rate matching. Specifically, in addition to a DMRS port of the UE, the UE usually needs to know information about a DMRS port of another jointly scheduled UE, to learn of specific REs that are occupied by a DMRS in a current transmission slot and that are not used for transmission of data of the UE. If the UE cannot obtain the information, the UE demodulates a DMRS of another user as data of the UE. In this case, a decoding error is caused. To enable the UE to learn of specific time-frequency resources that are not used for data transmission, an existing system provides a rate matching method.

To make full use of advantages of MU-MIMO, a design in which the MU-MIMO supports a maximum of 12 orthogonal ports (to be specific, a design of the DMRS pattern corresponding to (b) in FIG. 2) has been adopted in a standard. To implement a multi-user rate matching problem, an explicit signaling indication manner is adopted in the standard. For example, a value of num of CDM groups without data in Table 1 indicates information about a CDM group occupied by all ports in a current transmission slot of the system (because a sequence of CDM groups is agreed in a protocol, that a number of CDM groups without data is known is equal to that a specific CDM group is known, in other words, a sequence number of the CDM group is known), that is, a potential DMRS mapping resource is indicated, so that a user learns of a potential DMRS position, and then performs data demodulation at another position. 1 represents a CDM group 0, 2 represents a CDM group 0 and a CDM group 1, and 3 represents a CDM group 0, a CDM group 1, and a CDM group 2.

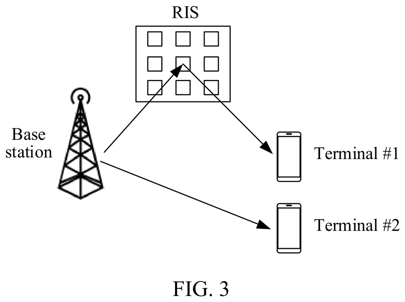

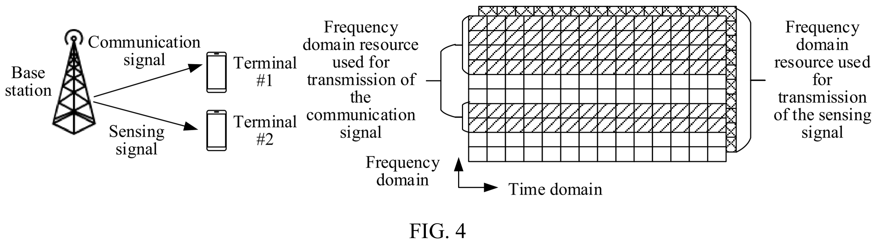

In a current DMRS rate matching scheme, a port indication field in DCI jointly indicates CDM group information and DMRS port information by indicating a value of the value in Table 1, in other words, CDM group information and DMRS port information of a terminal are configured simultaneously. Because the DMRS port information is configured in a DMRS port configuration periodicity, and a corresponding scheduling bandwidth is fixed, a scheduling bandwidth corresponding to the indication of the CDM group information is also fixed. When only a conventional MIMO service exists in the system, there is no problem when the UE performs rate matching in the corresponding scheduling bandwidth based on the CDM group information. However, in a service convergence scenario (in other words, a plurality of services coexist), bandwidths used for different services may be different. If rate matching assumptions are not made based on different bandwidths, channel estimation and data demodulation precision of the terminal are affected, and receiving performance is reduced. The following describes two specific service convergence scenarios with reference to FIG. 3 and FIG. 4.

FIG. 3 is a diagram of MU-MIMO spatial multiplexing in a reconfigurable intelligent surface (reconfigurable intelligent surface, RIS)-MIMO system. In this scenario, a base station sends a signal to an RIS, and the RIS reflects the signal to a terminal #1. In this case, the terminal #1 may be considered as a terminal served by the RIS. The base station directly sends a signal to a terminal #2, and the terminal #2 may be considered as a terminal served by the base station. In this scenario, there is a problem that a collision between beam switching and transmission efficiency exists in the RIS. A user served by the RIS tends to use a wideband beam and a high bandwidth for data transmission, and a user served by the base station uses a subband (subband) beam to obtain frequency domain diversity, so as to improve data transmission precision.

FIG. 4 is a diagram of MU-MIMO spatial multiplexing in an integrated sensing and communication (integrated sensing and communication, ISAC) MIMO system. In this scenario, a base station sends a communication signal to a terminal #1, and sends a sensing signal to a terminal #2. In consideration of phase continuity, the sensing signal is sent by using a wideband beam to improve precision, and a user sends the conventional communication signal by using a subband beam. For example, a diagram on the right of FIG. 4 is a diagram of a frequency domain resource spatially multiplexed by the communication signal and the sensing signal. A frequency domain resource used by the communication signal and a frequency domain resource used by the sensing signal partially overlap. In this scenario, if the terminal #1 still performs a same rate matching assumption for all bandwidths for receiving the communication signal, channel estimation and data demodulation precision may be affected, and receiving performance may be reduced.

In view of this, this application provides a rate matching method and a communication apparatus, to effectively resolve the foregoing technical problem.

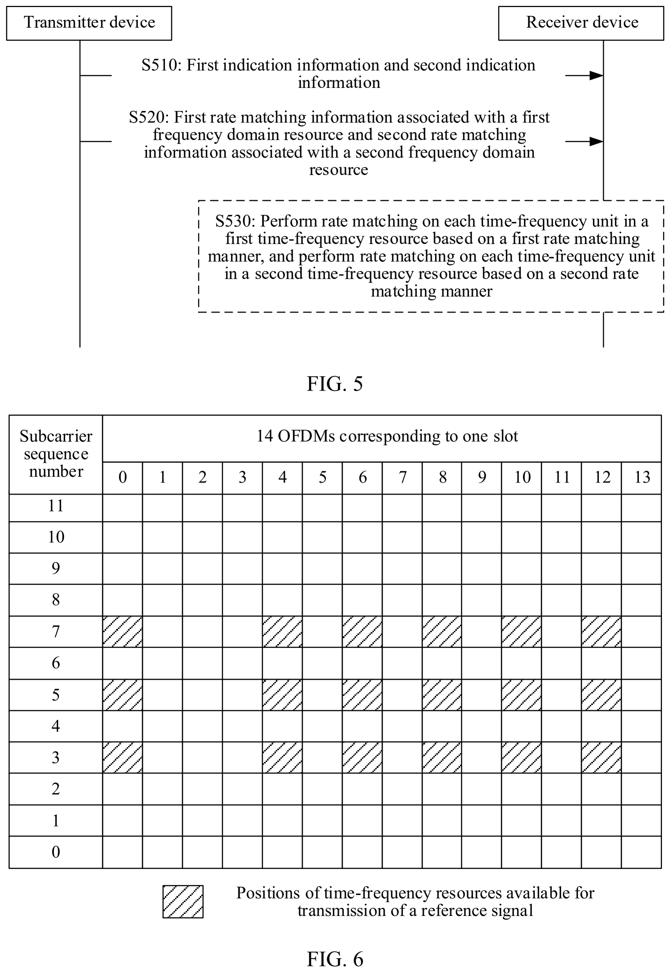

FIG. 5 is a schematic flowchart of a rate matching method according to an embodiment of this application. The method includes the following steps. For example, in the method, a transmitter device is a network device, and a receiver device is a terminal device.

S510: The transmitter device sends first indication information and second indication information to the receiver device. Correspondingly, the receiver device receives the first indication information and the second indication information from the transmitter device. The first indication information indicates a first frequency domain resource, the second indication information indicates a second frequency domain resource, and the first frequency domain resource and the second frequency domain resource do not overlap.

Optionally, the first frequency domain resource or the second frequency domain resource may include a plurality of frequency domain units in frequency domain. The first frequency domain resource is used as an example. The plurality of frequency domain units included in the first frequency domain resource may be all contiguous, may be partially contiguous and partially non-contiguous, or may be all non-contiguous in frequency domain. Similarly, the plurality of frequency domain units included in the second frequency domain resource may be all contiguous, may be partially contiguous and partially non-contiguous, or may be all non-contiguous in frequency domain. For example, the first indication information may indicate the first frequency domain resource by using a bitmap (bitmap). For another example, the first indication information may indicate the first frequency domain resource by using a frequency domain resource start point and a contiguous bandwidth (bandwidth, BW) size. Similarly, the second indication information may also indicate the second frequency domain resource according to the foregoing methods. This is not limited in this application.

S520: The transmitter device sends, to the receiver device, first rate matching information associated with the first frequency domain resource and second rate matching information associated with the second frequency domain resource. Correspondingly, the receiver device receives the first rate matching information and the second rate matching information from the transmitter device.

The first rate matching information indicates a position of a time-frequency resource that is in a first time-frequency resource and that is not used for data transmission, the second rate matching information indicates a position of a time-frequency resource that is in a second time-frequency resource and that is not used for data transmission, the first time-frequency resource includes a first time domain resource and the first frequency domain resource, and the second time-frequency resource includes the first time domain resource and the second frequency domain resource.

Optionally, the first rate matching information may be included in the first indication information, or may be separately sent. Similarly, the second rate matching information may be included in the second indication information, or may be separately sent. This is not limited in this application.

An indication manner of the rate matching information is described in detail below with reference to specific scenarios. Details are not described herein.

It may be understood that, in this embodiment of this application, rate matching corresponding to different bandwidths can be performed for different bandwidths (in other words, rate matching information is bound to a bandwidth, or a configuration of rate matching information is bandwidth specific (bandwidth specific)), but whether the first rate matching information is the same as or different from the second rate matching information is not limited.

Optionally, after the receiver device obtains rate matching information corresponding to different frequency domain resources, the method further includes the following step.

S530: The receiver device performs rate matching on the first time-frequency resource based on the first rate matching information, and performs rate matching on the second time-frequency resource based on the second rate matching information.

In the foregoing technical solution, the network device respectively binds corresponding rate matching mechanisms to the terminal device for different bandwidths. The method can ensure that the terminal device can perform differentiated rate matching in different bandwidths, to implement more accurate data demodulation, thereby improving receiving performance.

It should be understood that, in the foregoing technical solution, the first frequency domain resource and the second frequency domain resource are used as an example to describe a procedure of binding corresponding rate matching mechanisms for different bandwidths. In an actual application scenario, there may further be a third frequency domain resource, a fourth frequency domain resource, or more frequency domain resources. When there is a difference between signal transmission on these frequency domain resources, the method provided in this application may also be used. Corresponding rate matching information is configured for each frequency domain resource, and differentiated rate matching schemes may be provided for different bandwidths.

Optionally, the first frequency domain resource includes a frequency domain resource used for transmission of one type of signal or spatial multiplexing transmission of a plurality of types of signals, and the second frequency domain resource includes a frequency domain resource used for transmission of one type of signal or spatial multiplexing transmission of a plurality of types of signals. In this case, for example, that signal transmission on the first frequency domain resource is different from that on the second frequency domain resource may include the following two difference scenarios.

It should be understood that different types of signals herein may be considered as signals corresponding to different services. For example, in the RIS-MIMO system shown in FIG. 3, the signal sent by the base station to the terminal #1 and the signal sent by the base station to the terminal #2 may be considered as different signals. In the ISAC MIMO system shown in FIG. 3, the communication signal sent by the base station to the terminal #1 and the sensing signal sent by the base station to the terminal #2 may be considered as different signals.

Difference scenario 1: Types of signals whose transmission is performed on the first frequency domain resource and the second frequency domain resource are different or are not completely the same, and it may be considered that there is a difference between signal transmission on the two frequency domain resources. For example, in the ISAC MIMO system, multi-user spatial multiplexing transmission of a sensing signal is performed on the first frequency domain resource, and multi-user spatial multiplexing transmission of a communication signal is performed on the second frequency domain resource (that is, types of signals whose transmission is performed on the two frequency domain resources are different); or multi-user spatial multiplexing transmission of a sensing signal and a communication signal is performed on the first frequency domain resource, and multi-user spatial multiplexing transmission of a communication signal is performed on the second frequency domain resource (that is, types of signals whose transmission is performed on the two frequency domain resources are not completely the same).

Difference scenario 2: A type of a signal whose transmission is performed on the first frequency domain resource is the same as a type of a signal whose transmission is performed on the second frequency domain resource, but reference signal patterns (in other words, patterns of resources available for transmission of a reference signal, where the resources are not reference signal resources used for one specific actual transmission) corresponding to the type of signal whose transmission is performed on different frequency domain resources are different. It may also be considered that there is a difference between signal transmission on the two frequency domain resources. For example, in the ISAC MIMO system, multi-user spatial multiplexing transmission of a communication signal is performed on the first frequency domain resource, and multi-user spatial multiplexing transmission of a communication signal is also performed on the second frequency domain resource (that is, types of signals whose transmission is performed on the two frequency domain resources are the same). However, a DMRS pattern shown in (a) in FIG. 2 needs to be used when DMRS rate matching is performed on the first frequency domain resource, and a DMRS pattern shown in (b) in FIG. 2 needs to be used when DMRS rate matching is performed on the second frequency domain resource.

The following describes related steps in the method in detail by using the following example in the scenario 1: The first frequency domain resource includes a frequency domain resource used for multi-user spatial multiplexing transmission of a first type of signal and a second type of signal (the first type of signal and the second type of signal are signals of different types) and the second frequency domain resource includes a frequency domain resource used for multi-user spatial multiplexing transmission of the first type of signal. For example, the first type of signal is a communication signal, and the second type of signal is a sensing signal.

In S510, if the first frequency domain resource includes a plurality of frequency domain units (the following uses an example in which the plurality of frequency domain units are N frequency domain units for description), that the first frequency domain resource includes the frequency domain resource used for spatial multiplexing transmission of the first type of signal and the second type of signal may be understood as: The spatial multiplexing transmission of the first type of signal and the second type of signal is performed on all of the N frequency domain units in the first frequency domain resource, or spatial multiplexing transmission of a first signal and a second signal is performed on a part of the N frequency domain units in the first frequency domain resource. This is not limited in this application. For example, the frequency domain unit is one RB, and the first frequency domain resource includes an RB #1, an RB #2, an RB #3, an RB #4, and an RB #5. In this case, the spatial multiplexing transmission of the first signal and the second signal is performed on all of the five RBs; or the spatial multiplexing transmission of the first signal and the second signal is performed on the RB #3, the RB #4, and the RB #5 in the five RBs, and no signal is transmitted to the receiver device on the RB #1 and the RB #2.

For example, the first time domain resource in S510 may be considered as a corresponding slot in which the receiver device receives the first signal on the first frequency domain resource and receives the second signal on the second frequency domain resource, where the first signal is the first type of signal or the second type of signal, and the second signal is the first type of signal.

It should be understood that, if transmission of a reference signal is performed on a time-frequency resource, the time-frequency resource is unavailable for data transmission. Therefore, in the scenario 1, that the first rate matching information indicates the position of the time-frequency resource that is in the first time-frequency resource and that is not used for data transmission in S520 may be understood as: The first rate matching information indicates a position of a time-frequency resource for transmission of the first reference signal and the second reference signal on the first time-frequency resource. Similarly, in the scenario 1, that the second rate matching information indicates the position of the time-frequency resource that is in the second time-frequency resource and that is not used for data transmission may be understood as: The second rate matching information indicates a position of a time-frequency resource for transmission of a first reference signal on the second time-frequency resource. The first reference signal is the first type of signal, and the second reference signal is the second type of signal. It should be noted that, because there is no data in a current sensing signal, the sensing signal may be understood as a reference signal in this application. For example, when the second type of signal is a sensing signal, the second reference signal is the second type of signal.

The following provides two specific implementations of the first rate matching information and the second rate matching information. An implementation of the first rate matching information is basically similar to that of the second rate matching information. For ease of description, the first rate matching information is used as an example for description.

Manner 1: The first rate matching information includes first mapping information and third indication information, the first mapping information indicates a position of a time-frequency resource available for transmission of the first reference signal and a position of a time-frequency resource available for transmission of the second reference signal that correspond to the first time-frequency resource, and the third indication information indicates a position of a time-frequency resource actually used for transmission of the first reference signal and a position of a time-frequency resource actually used for transmission of the second reference signal that are in the time-frequency resources indicated by the first mapping information.

Optionally, the first mapping information indicates a pattern of the first reference signal and a pattern of the second reference signal, the pattern of the first reference signal indicates a position of a time-frequency resource that is available for transmission of the first reference signal and that is in a resource grid included in the first time domain resource, and the pattern of the second reference signal indicates a position of a time-frequency resource that is available for transmission of the second reference signal and that is in a resource grid included in the first time domain resource. One resource grid includes 14 OFDM symbols in time domain and 12 subcarriers in frequency domain. The third indication information indicates a position of a time-frequency resource that is actually used for transmission of the first reference signal in each resource grid in the first time-frequency resource and that is determined based on the pattern of the first reference signal and a position of a time-frequency resource that is actually used for transmission of the second reference signal in each resource grid in the first time-frequency resource and that is determined based on the pattern of the second reference signal. For example, the pattern of the first reference signal is shown in (b) in FIG. 2, and the pattern of the second reference signal is shown in FIG. 6. Positions of time-frequency resources occupied by CDM groups 0, 1, and 2 in (b) in FIG. 2 are positions of time-frequency resources available for transmission of the first reference signal, and positions filled with left slashes in FIG. 6 are positions of time-frequency resources available for transmission of the second reference signal.

For example, the pattern of the first reference signal and the pattern of the second reference signal may be predefined patterns, the first mapping information includes identification information of the pattern of the first reference signal and the pattern of the second reference signal, and the receiver device determines the pattern of the first reference signal and the pattern of the second reference signal respectively based on identifiers of the pattern of the first reference signal and the pattern of the second reference signal.

For example, the third indication information may indicate, by indicating a bitmap, a reference signal port, or information about a CDM group, a specific time-frequency resource (that is, RE) actually occupied by a reference signal (that is, unavailable for data transmission), in a time-frequency resource that is available for transmission of the reference signal and that is in a pattern of the reference signal (the pattern of the first reference signal or the second reference signal). This is not limited in this application.

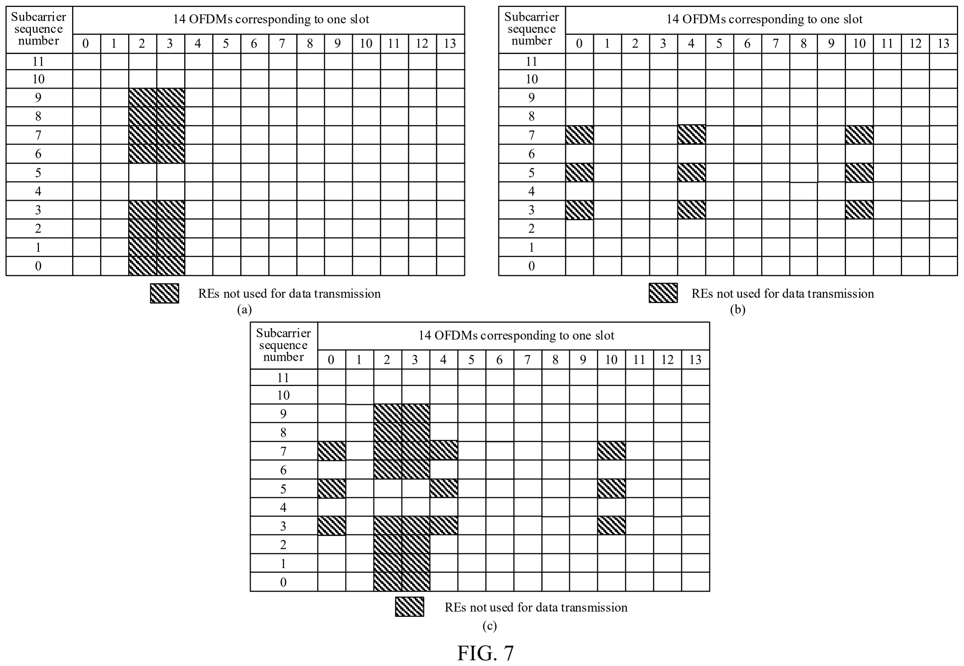

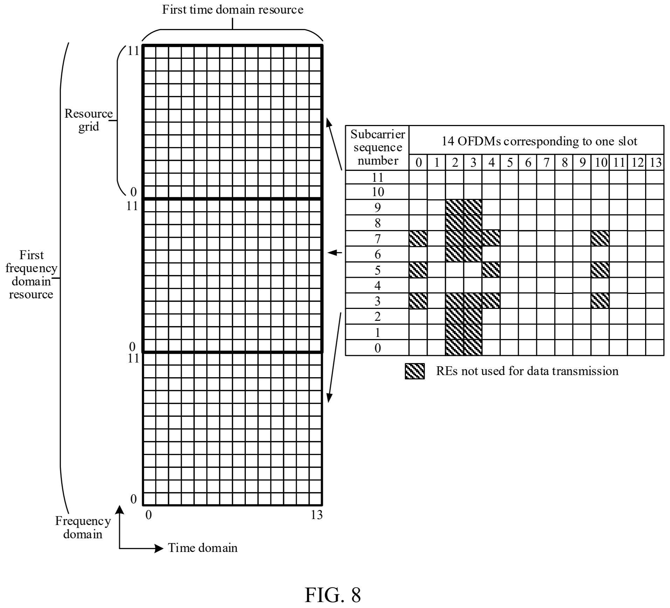

Manner 1 is described by using an example with reference to a specific pattern. For example, the pattern of the first reference signal is shown in (b) in FIG. 2, and the pattern of the second reference signal is shown in FIG. 6. The third indication information indicates that REs occupied by the CDM group 0 and the CDM group 1 in the pattern of the first reference signal are time-frequency resources actually used for transmission of the first reference signal, and REs in which OFDM symbol sequence numbers 0, 4, and 10 separately correspond to subcarrier sequence numbers 7, 5, and 3 and that are in the pattern of the second reference signal are time-frequency resources actually used for transmission of the second reference signal. In this case, positions of REs that are not used for data transmission in a resource grid and that are determined based on the pattern of the first reference signal and the third indication information are shown in (a) in FIG. 7, and positions of REs that are not used for data transmission in a resource grid and that are determined based on the pattern of the second reference signal and the third indication information are shown in (b) in FIG. 7. The receiver device needs to multiplex the REs that are not used for the data transmission and that are determined based on the two patterns and the third indication information, to finally determine a pattern corresponding to positions of REs not used for data transmission in a resource grid, as shown in (c) in FIG. 7. For example, when the first time-frequency resource is shown in FIG. 8, it may be understood that the first time-frequency resource includes three resource grids, and the receiver device may perform rate matching based on the pattern shown in (c) in FIG. 7, and determine positions of REs not used for data transmission in each resource grid in the first time-frequency resource.

Optionally, the first mapping information indicates a pattern of the first reference signal and a pattern of the second reference signal, the pattern of the first reference signal indicates a position of a time-frequency resource that is available for transmission of the first reference signal and that is in the first time domain resource, and the pattern of the second reference signal indicates a position of a time-frequency resource that is available for transmission of the second reference signal and that is in the first time domain resource. The third indication information indicates a position of a time-frequency resource that is actually used for transmission of the first reference signal in the first time-frequency resource and that is determined based on the pattern of the first reference signal and a position of a time-frequency resource that is actually used for transmission of the second reference signal in the first time-frequency resource and that is determined based on the pattern of the second reference signal. It may be understood that a pattern size in this optional manner is the same as a distribution size of the first time-frequency resource in time-frequency domain.

Optionally, in this implementation, mapping information of the first signal and the third indication information may be carried in various types of signaling in different periodicities and sent through different channels.

Optionally, in this implementation, the pattern of the first reference signal is the same as the pattern of the second reference signal. For example, the patterns of the first reference signal and the second reference signal are shown in (b) in FIG. 2.

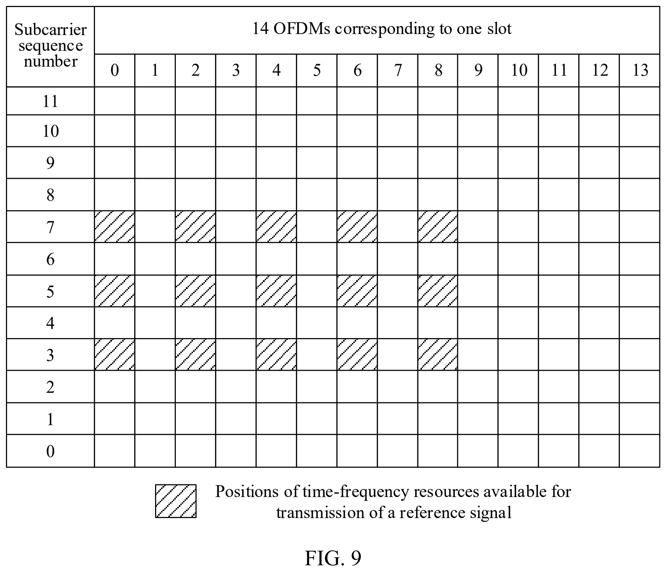

Optionally, the pattern of the first reference signal is different from the pattern of the second reference signal. For example, the pattern of the first reference signal is shown in (b) in FIG. 2, and the pattern of the second reference signal is shown in FIG. 6 or FIG. 9. Positions of REs available for transmission of the first reference signal in the pattern shown in FIG. 6 do not collide with positions of REs available for transmission of the second reference signal in (b) in FIG. 2, and positions of REs available for transmission of the second reference signal in the pattern corresponding to FIG. 9 collide with positions of REs available for transmission of the reference signal in (b) in FIG. 2. The pattern collision herein means that at least one same position exists between positions of REs available for transmission of the first reference signal and the second reference signal in the two patterns. For example, positions of the pattern collision are positions of REs in which a symbol sequence number 2 separately corresponds to subcarrier sequence numbers 7, 5, and 3 in the two patterns.

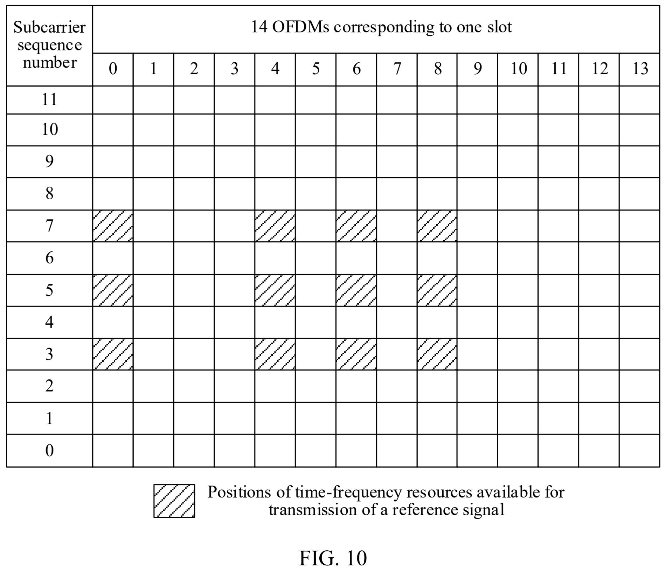

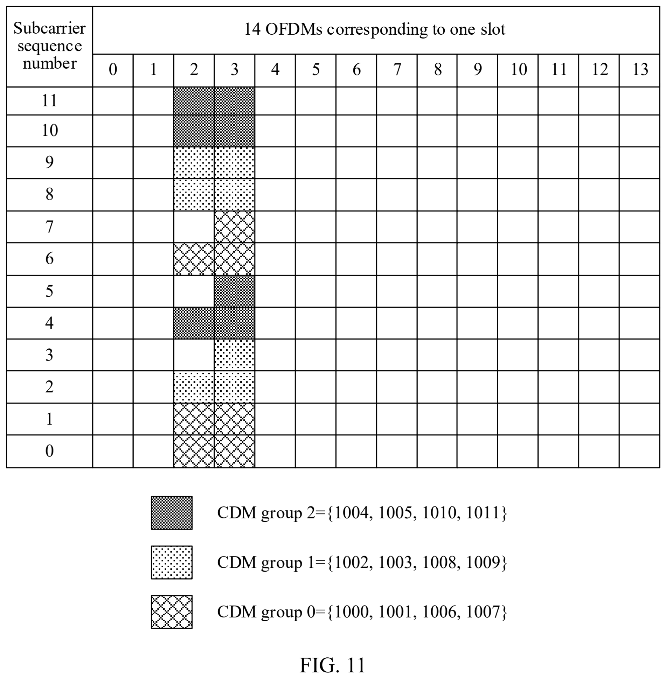

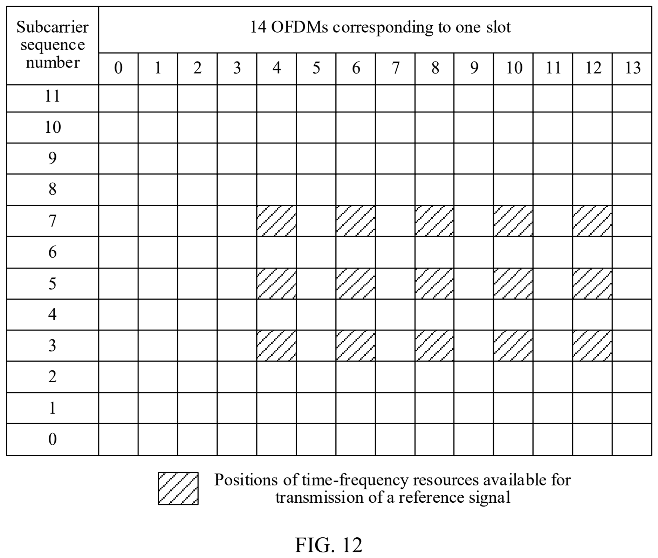

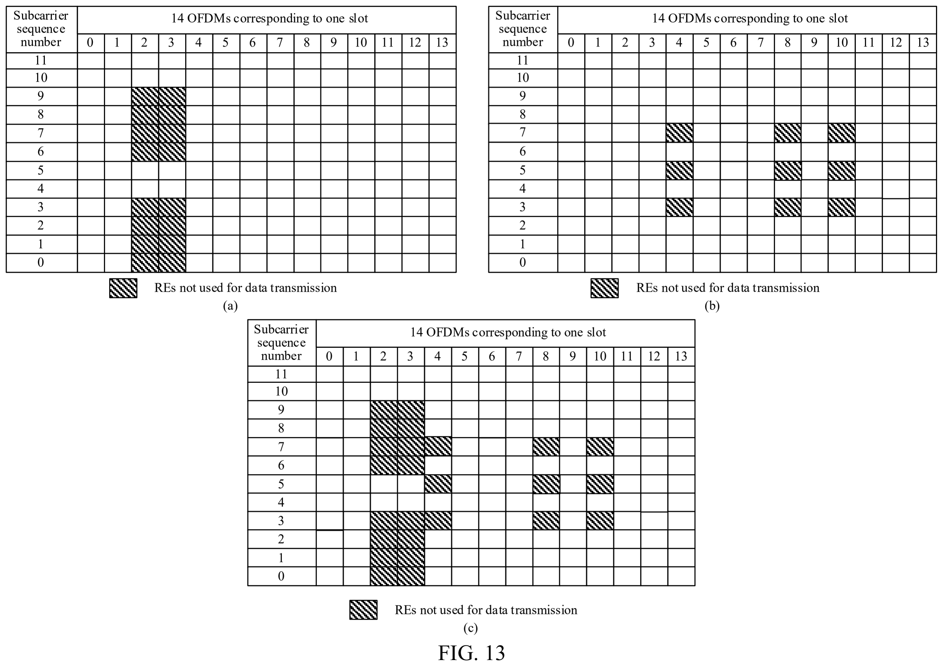

Optionally, when the first rate matching information is indicated in Manner 1, if the pattern of the first reference signal is different from the pattern of the second reference signal, and the two patterns collide, the first mapping information further includes a related rule for eliminating the pattern collision. For example, the following provides three possible rules for eliminating the pattern collision.
(1) A first rule indicates to keep the pattern of the first reference signal unchanged, and indicates that a time-frequency resource at a colliding position in the pattern of the second reference signal is unavailable for transmission of the second reference signal. For example, the pattern of the first reference signal is shown in (b) in FIG. 2, the pattern of the second reference signal is shown in FIG. 9, and a new reference signal pattern obtained through collision elimination on the pattern of the second reference signal according to the first rule is shown in FIG. 10.
(2) A second rule indicates to keep the pattern of the second reference signal unchanged, and indicates that a time-frequency resource at a colliding position in the pattern of the first reference signal is unavailable for transmission of the first reference signal. For example, the pattern of the first reference signal is shown in (b) in FIG. 2, the pattern of the second reference signal is shown in FIG. 9, and a new reference signal pattern obtained through collision elimination on the pattern of the first reference signal according to the second rule is shown in FIG. 11.
(3) A third rule indicates to keep the pattern of the first reference signal unchanged, and map the pattern of the second reference signal in a staggered manner; or keep the pattern of the second reference signal unchanged, and map the pattern of the first reference signal in a staggered manner, so that two patterns adjusted according to the third rule do not collide. For example, the staggered mapping may be understood as translating, in time domain or frequency domain, a position of a time-frequency resource that is available for transmission of the second reference signal and that is in one of the two patterns, so that two patterns adjusted according to the third rule do not collide. For example, the pattern of the first reference signal is shown in (b) in FIG. 2, and the pattern of the second reference signal is shown in FIG. 9. The third rule indicates to translate, rightward by four symbols, positions of REs that are available for transmission of the second reference signal and that are in the pattern of the second reference signal. A new reference signal pattern obtained through collision elimination on the pattern of the second reference signal according to the third rule is shown in FIG. 12. Further, if the third indication information indicates that the REs occupied by the CDM group 0 and the CDM group 1 in the pattern of the first reference signal are the the time-frequency resources actually used for the transmission of the first reference signal, and REs in which symbol sequence numbers 4, 8, and 10 separately correspond to subcarrier sequence numbers 7, 5, and 3 and that are in the pattern of the second reference signal are time-frequency resources actually used for transmission of the second reference signal, positions of REs that are not used for data transmission in a resource grid and that are determined based on the pattern of the first reference signal and the third indication information are shown in (a) in FIG. 13, and positions of REs that are not used for data transmission in a resource grid and that are determined based on the pattern of the second reference signal and the third indication information are shown in (b) in FIG. 13. The receiver device needs to multiplex the REs that are not used for data transmission and that are determined based on the two patterns and the third indication information, to finally determine positions of REs not used for data transmission in a resource grid, as shown in (c) in FIG. 13.

Manner 2: The first rate matching information directly indicates a position of a time-frequency resource that is in the first time-frequency resource and that is not used for transmission of the first reference signal and the second reference signal.

Optionally, the first rate matching information directly indicates a position of a time-frequency resource that is in a resource grid in the first time-frequency resource and that is actually used for transmission of the first reference signal and the second reference signal, or the first rate matching information directly indicates that a position of a time-frequency resource that is in a resource grid in the first time-frequency resource and that is used for transmission of the first reference signal and the second reference signal does not exist actually. The receiver device may determine, based on the first rate matching information, a position of a time-frequency resource that is in each resource grid in the first time-frequency resource and that is used for transmission of the first reference signal and the second reference signal.

Optionally, the first rate matching information may directly indicate a position of a time-frequency resource that is in all time-frequency resources in the first time-frequency resource and that is actually used for transmission of the first reference signal and the second reference signal, or the first rate matching information may directly indicate that a position of a time-frequency resource that is in all time-frequency resources in the first time-frequency resource and that is used for transmission of the first reference signal and the second reference signal does not exist actually.

It may be understood that, in Implementation 1, the transmitter indicates the first mapping information and the third indication information to the receiver, and the receiver autonomously determines the position of the time-frequency resource actually used for transmission of the first reference signal and the position of the time-frequency resource actually used for transmission of the second reference signal. In Implementation 2, it may be understood as that the transmitter device directly notifies the receiver of a result determined based on the first mapping information and the third indication information in Manner 1.

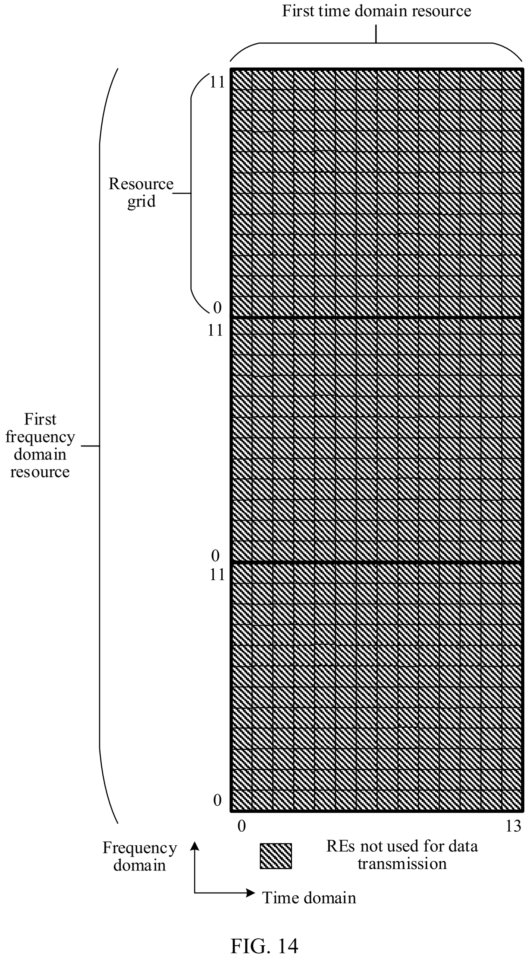

Manner 3: Manner 3 is mainly for a scenario in which a plurality of types of signals are sent on a segment of frequency domain resource. Specifically, because transmission of two types of signals is performed on the first frequency domain resource, in this application, the transmitter device may indicate, to the receiver device by using the first rate matching information, that no frequency domain resource in the first frequency domain resource is used for data transmission. In this case, the receiver device determines, based on the first rate matching information, that no time-frequency resource in the first time-frequency resource is used for data transmission. For example, in this manner, the first rate matching information may use one bit to indicate that no frequency domain resource in the first frequency domain resource is used for data transmission. This is not limited in this application. For example, the first time-frequency resource is shown in FIG. 14, the first time-frequency resource includes three resource grids, and the first rate matching information indicates that no frequency domain resource in the first frequency domain resource is used for data transmission. In this case, as shown in FIG. 14, the receiver determines that no time-frequency resource in the first time-frequency resource is used for data transmission.

Because an implementation of the second rate matching information is basically similar to that of the first rate matching information, only brief descriptions are provided herein. Based on Manner 1, the second rate matching information includes second mapping information and fourth indication information, the second mapping information includes a pattern of a third reference signal corresponding to the first signal, and the fourth indication information indicates a position of a time-frequency resource that is in the pattern of the third reference signal and that is not used for data transmission. Based on Manner 2, the second rate matching information directly indicates a position of a time-frequency resource that is in the second time-frequency resource and that is not used for data transmission. For related descriptions of different implementations, refer to the foregoing descriptions of the first rate matching information. Details are not described herein again.

The foregoing describes in detail the rate matching method provided in this application, and the following provides examples with reference to specific scenarios.

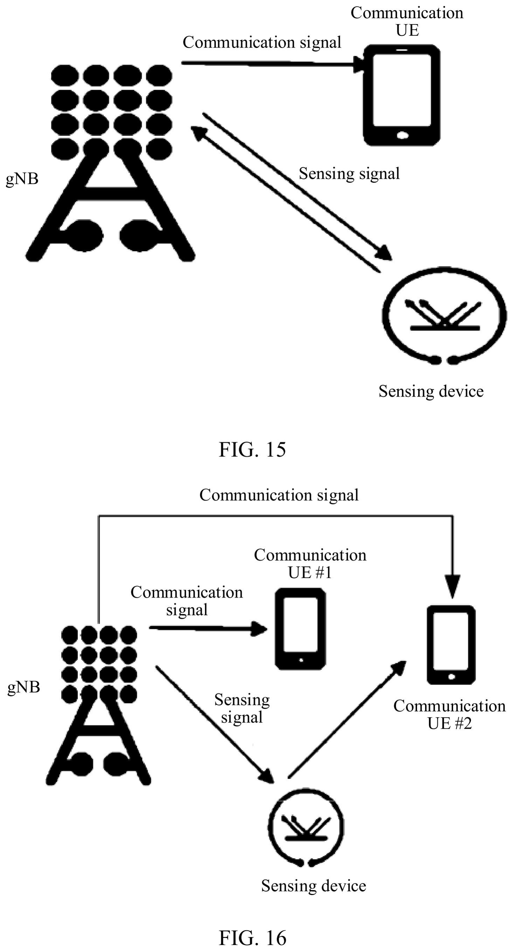

Scenario 1: In a gNB monostatic (monostatic) scenario in an integrated sensing and communication MIMO spatial multiplexing system shown in FIG. 15, a gNB sends a sensing signal to a sensing device. In the gNB monostatic scenario, a transmitter device of the sensing signal and a receiver device of an echo signal of the sensing signal are a same device (that is, the gNB). Therefore, a communication UE in this scenario receives only communication data. It is assumed that the UE separately associates corresponding rate matching information on a frequency domain resource (that is, an example of the second frequency domain resource) used for transmission of a communication signal (that is, an example of the first type of signal) and a frequency domain resource (that is, an example of the first frequency domain resource) spatially multiplexed by a communication signal and a sensing signal (that is, an example of the second type of signal).

For the UE that receives only the communication data, the UE has known all frequency domain resources (to be specific, the first frequency domain resource and the second frequency domain resource) used for transmission of the communication signal, and a reference signal pattern of the communication signal whose transmission is performed on the frequency domain resources, but does not know the frequency domain resource (that is, the example of the first frequency domain resource) spatially multiplexed by the communication signal and the sensing signal and a pattern of the sensing signal corresponding to the frequency domain resource. Therefore, the gNB needs to indicate, to the UE, the frequency domain resource spatially multiplexed by the communication signal and the sensing signal and the pattern of the sensing signal corresponding to the frequency domain resource. The UE performs rate matching on different frequency domain resources based on patterns corresponding to signals whose transmission is performed on the different frequency domain resources. Specifically, the UE performs, based on the pattern of the corresponding communication signal, rate matching on the frequency domain resource used only for the transmission of the communication signal, and performs, based on the reference signal pattern of the corresponding communication signal and the pattern of the corresponding sensing signal, rate matching on the frequency domain resource spatially multiplexed by the communication signal and the sensing signal.

It should be noted that, before receiving the frequency domain resource spatially multiplexed by the communication signal and the sensing signal, the UE only knows specific frequency domain resources occupied by the first frequency domain resource and the second frequency domain resource, but does not know which of these frequency domain resources belongs to the first frequency domain resource and which of these frequency domain resources belongs to the second frequency domain resource. Therefore, for the communication UE, the gNB needs to notify the UE of a position of the first frequency domain resource and/or a position of the second frequency domain resource, so that reference signal rate matching can be performed in different bandwidths based on patterns of different signals.

Scenario 2: In a gNB bistatic (bistatic) scenario in an integrated sensing and communication MIMO spatial multiplexing system shown in FIG. 16, a gNB sends a sensing signal to a sensing device. In the gNB bistatic scenario, a transmitter device of the sensing signal and a receiver device of an echo signal of the sensing signal are different devices. Therefore, a communication UE in this scenario may be a UE that receives only a communication signal, or may be a UE that receives both a communication signal and a sensing signal. As shown in FIG. 16, a UE #1 is the UE that receives only the communication signal, and a UE #2 is the UE that receives both the communication signal and the sensing signal. It is assumed that the UE separately associates corresponding rate matching information only on a frequency domain resource (that is, an example of the second frequency domain resource) used for transmission of a communication signal (that is, an example of the first type of signal) and a frequency domain resource (that is, an example of the first frequency domain resource) spatially multiplexed by a communication signal and a sensing signal (that is, an example of the second type of signal). The UE may have different rate matching schemes based on types of received signals.

For the UE that receives both the communication signal (that is, an example of the first type of signal) and the sensing signal (that is, an example of the second type of signal), the UE has known the frequency domain resource (that is, an example of the second frequency domain resource) used only for the transmission of the communication signal and a reference signal pattern of the communication signal corresponding to the frequency domain resource, and also knows the frequency domain resource (that is, an example of the first frequency domain resource) spatially multiplexed by the communication signal and the sensing signal and a reference signal pattern of the communication signal corresponding to the frequency domain resource and a pattern of the sensing signal corresponding to the frequency domain resource. The UE performs rate matching on different frequency domain resources based on patterns corresponding to signals whose transmission is performed. Specifically, the UE performs, based on the pattern of the corresponding communication signal, rate matching on the frequency domain resource used only for the transmission of the communication signal, and performs, based on the reference signal pattern of the corresponding communication signal and the pattern of the corresponding sensing signal, rate matching on the frequency domain resource spatially multiplexed by the communication signal and the sensing signal.

For a UE that receives only communication data, refer to the descriptions that the UE performs the reference signal rate matching in Scenario 1. Details are not described herein again.

Scenario 3: In a gNB monostatic scenario in an integrated sensing and communication MIMO spatial multiplexing system shown in FIG. 15, a communication UE receives only communication data. It is assumed that the UE separately associates corresponding rate matching information only on a frequency domain resource (that is, an example of the second frequency domain resource) used for transmission of a communication signal (that is, an example of the first type of signal) and a frequency domain resource (that is, an example of the first frequency domain resource) spatially multiplexed by a communication signal and a sensing signal (that is, an example of the second type of signal).

For the UE that receives only the communication data, the UE has known all frequency domain resources (to be specific, the first frequency domain resource and the second frequency domain resource) used for transmission of the communication signal, and a reference signal pattern of the communication signal whose transmission is performed on the frequency domain resources, but does not know the frequency domain resource (that is, the example of the first frequency domain resource) spatially multiplexed by the communication signal and the sensing signal and a pattern of the sensing signal corresponding to the frequency domain resource. Therefore, the UE may receive, from a gNB, the frequency domain resource spatially multiplexed by the communication signal and the sensing signal and the pattern of the sensing signal corresponding to the frequency domain resource. The UE performs rate matching on different frequency domain resources based on patterns corresponding to signals whose transmission is performed. Specifically, the UE performs, based on the pattern of the corresponding communication signal, rate matching on the frequency domain resource used only for the transmission of the communication signal. The UE considers that data is not received, in other words, data transmission is not performed, on the frequency domain resource spatially multiplexed by the communication signal and the sensing signal.

It should be understood that the reference signal in this application may be any reference signal that can be used for channel estimation, for example, a DMRS, a CRS, an SRS, or another reference signal that can be used to implement a same or similar function. In a communication system that may appear in the future, a name of the reference signal may change. However, the technical solutions of this application are applicable provided that a function of the reference signal is still used for channel estimation at the receiver device.

It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

It should be further understood that in embodiments of this application, unless otherwise stated or there is a logic collision, terms and/or descriptions between different embodiments are consistent and may be mutually referenced, and technical features in different embodiments may be combined into a new embodiment based on an internal logical relationship thereof.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, the method and the operations implemented by the device (for example, the receiver device or the transmitter device) may alternatively be implemented by a component (for example, a chip or a circuit) of the device.

The foregoing describes in detail the method provided in embodiments of this application with reference to FIG. 1 to FIG. 16. The foregoing method is mainly described from a perspective of interaction between the receiver device and the transmitter device. It may be understood that, to implement the foregoing functions, the receiver device and the transmitter device include corresponding hardware structures and/or software modules for performing the functions.

A person skilled in the art should be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

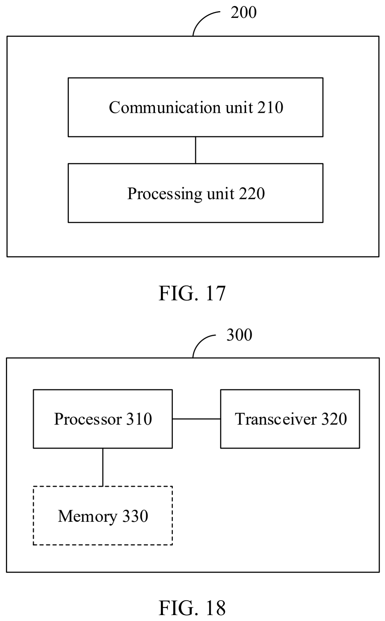

The following describes in detail communication apparatuses provided in embodiments of this application with reference to FIG. 17 and FIG. 18. It should be understood that descriptions of apparatus embodiments correspond to the descriptions of the method embodiments. Therefore, for content that is not described in detail, refer to the foregoing method embodiments. For brevity, details of a part of content are not described herein again. In embodiments of this application, the receiver device or the transmitter device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

The foregoing describes in detail the data transmission method provided in this application, and the following describes communication apparatuses provided in this application. In a possible implementation, the apparatus is configured to implement the steps or procedures corresponding to the transmitter device in the foregoing method embodiments. In another possible implementation, the apparatus is configured to implement the steps or procedures corresponding to the receiver device in the foregoing method embodiments.

FIG. 17 is a block diagram of a communication apparatus 200 according to an embodiment of this application. As shown in FIG. 17, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement steps or procedures performed by the transmitter device in the foregoing method embodiments correspondingly. The processing unit 220 is configured to perform processing-related operations of the receiver device in the foregoing method embodiments. The communication unit 210 is configured to perform sending-related operations of the receiver device in the foregoing method embodiments.

In another possible design, the apparatus 200 may implement steps or procedures performed by the transmitter device in the foregoing method embodiments correspondingly. The communication unit 210 is configured to perform receiving-related operations of the transmitter device in the foregoing method embodiments. The processing unit 220 is configured to perform processing-related operations of the transmitter device in the foregoing method embodiments.

It should be understood that the apparatus 200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the receiver device in the foregoing embodiments, and may be configured to perform procedures and/or steps corresponding to the receiver device in the foregoing method embodiments. Alternatively, the apparatus 200 may be specifically the transmitter device in the foregoing embodiments, and may be configured to perform procedures and/or steps corresponding to the transmitter device in the foregoing method embodiments. To avoid repetition, details are not described herein again.

The apparatus 200 in each of the foregoing solutions has functions of implementing corresponding steps performed by the receiver device in the foregoing method, or the apparatus 200 in each of the foregoing solutions has functions of implementing corresponding steps performed by the transmitter device in the foregoing method. The functions may be implemented by hardware, or may be implemented by hardware executing corresponding software. The hardware or software includes one or more modules corresponding to the foregoing functions. For example, the communication unit may be replaced with a transceiver (for example, a sending unit of the communication unit may be replaced with a transmitter, and a receiving unit of the communication unit may be replaced with a receiver), and another unit like the processing unit may be replaced with a processor, to separately perform the sending/receiving operations and the processing-related operations in the method embodiments.

In addition, alternatively, the communication unit may be a transceiver circuit (for example, may include a receiving circuit and a transmitter circuit), and the processing unit may be a processing circuit. In this embodiment of this application, the apparatus in FIG. 17 may be the transmitter device or the receiver device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 18 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the receiver device in the foregoing method embodiments. In another possible implementation, the apparatus 300 is configured to implement procedures and steps corresponding to the transmitter device in the foregoing method embodiments.

It should be understood that the apparatus 300 may be specifically the receiver device or the transmitter device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the receiver device or the transmitter device in the foregoing method embodiments. Optionally, the memory 330 may include a read-only memory and a random access memory, and provide instructions and data for the processor. A part of the memory may further include a non-volatile random access memory. For example, the memory may further store information of a device type. The processor 310 may be configured to execute the instructions stored in the memory. When the processor 310 executes the instructions stored in the memory, the processor 310 is configured to perform steps and/or procedures corresponding to the receiver device or the transmitter device in the foregoing method embodiments.

In an implementation process, steps in the foregoing method may be implemented by using a hardware integrated logic circuit in the processor, or by using instructions in a form of software. The steps in the method disclosed with reference to embodiments of this application may be directly executed by a hardware processor, or may be executed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments may be implemented by using a hardware integrated logic circuit in the processor, or by using instructions in a form of software. The processor may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor in this embodiment of this application may implement or perform the method, the steps, and the logical block diagrams that are disclosed in embodiments of this application. The general-purpose processor may be a microprocessor, or the processor may be any conventional processor or the like. The steps in the method disclosed with reference to embodiments of this application may be directly executed by a hardware decoding processor, or may be executed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and method described herein is intended to include, but not limited to, these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, the operations and/or procedures performed by the receiver device or the transmitter device in the method embodiments of this application are performed.

This application further provides a computer program product. The computer program product includes computer program code or instructions. When the computer program code or the instructions are run on a computer, the operations and/or procedures performed by the receiver device or the transmitter device in the method embodiments of this application are performed.

In addition, this application further provides a chip, and the chip includes a processor. A memory configured to store a computer program is disposed independent of the chip. The processor is configured to execute the computer program stored in the memory, so that operations and/or processing performed by the receiver device or the transmitter device in any method embodiment are/is performed.

Further, the chip may include a communication interface. The communication interface may be an input/output interface, an interface circuit, or the like. Further, the chip may include the memory.

In addition, this application further provides a communication system, including the receiver device and the transmitter device in embodiments of this application.

It should be further noted that the memory described herein is intended to include, but not limited to, these memories and any memory of another appropriate type.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electrical, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or a part of the steps in the method described in embodiments of this application. The foregoing storage medium includes any medium that can store program code, for example, a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" in embodiments of this application are used for distinguishing between a plurality of objects, but are not intended to limit sizes, content, a sequence, a time sequence, priorities, importance of the plurality of objects, or the like.

It should be further understood that, in this application, "when", "provided", and "if" all mean that a network element performs corresponding processing in a specific objective situation, but do not constitute a limitation on time, do not require that the network element has a determining action during implementation, and do not mean other limitations either.

It should be further understood that in this application, "at least one" means one or more, and "a plurality of' means two or more. "At least one of items (pieces)" or a similar expression thereof refers to one item (piece) or a plurality of items (pieces), that is, any combination of these items, including any combination of singular items (pieces) or plural items (pieces). For example, at least one item (piece) of a, b, or c represents a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", that is, when more elements are included in the expression, a case to which the item is applicable may also be obtained according to the foregoing rule.

It should be further understood that the term "and/or" in this specification describes only an association relationship between associated objects, and represents that three relationships may exist. For example, A and/or B may represent the following cases: A exists alone, both A and B are included, and B exists alone, where A and B may be singular or plural. The character "/" generally represents an "or" relationship between the associated objects. For example, A/B represents A or B.

It should be further understood that in embodiments of this application, "B corresponding to A" represents that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rate matching method, comprising:
receiving first indication information and second indication information, wherein the first indication information indicates a first frequency domain resource, the second indication information indicates a second frequency domain resource, and the first frequency domain resource and the second frequency domain resource do not overlap; and
receiving first rate matching information associated with the first frequency domain resource and second rate matching information associated with the second frequency domain resource, wherein the first rate matching information indicates a position of a time-frequency resource that is in a first time-frequency resource and that is not used for data transmission, the second rate matching information indicates a position of a time-frequency resource that is in a second time-frequency resource and that is not used for data transmission, the first time-frequency resource comprises a first time domain resource and the first frequency domain resource, and the second time-frequency resource comprises the first time domain resource and the second frequency domain resource.

2. The method according to claim 1, wherein
rate matching is performed on the first time-frequency resource based on the first rate matching information; and
rate matching is performed on the second time-frequency resource based on the second rate matching information.

3. The method according to claim 1 or 2, wherein the first frequency domain resource comprises a frequency domain resource used for spatial multiplexing transmission of a first type of signal and a second type of signal, the second frequency domain resource comprises a frequency domain resource used for transmission of the first type of signal, and the first type of signal and the second type of signal are signals of different types.

4. The method according to claim 3, wherein the first rate matching information indicates that no time-frequency resource in the first time-frequency resource is used for data transmission.

5. The method according to claim 3, wherein the first rate matching information indicates a position of a time-frequency resource for transmission of a first reference signal and a second reference signal on the first time-frequency resource, the second rate matching information indicates a position of a time-frequency resource for transmission of the first reference signal on the second time-frequency resource, the first reference signal is the first type of signal, and the second reference signal is the second type of signal.

6. The method according to claim 5, wherein
the first rate matching information comprises first mapping information and third indication information, the first mapping information indicates a position of a time-frequency resource available for transmission of the first reference signal and a position of a time-frequency resource available for transmission of the second reference signal that correspond to the first time-frequency resource, and the third indication information indicates a position of a time-frequency resource actually used for transmission of the first reference signal and a position of a time-frequency resource actually used for transmission of the second reference signal that are in the time-frequency resources indicated by the first mapping information.

7. The method according to claim 5 or 6, wherein
the second rate matching information comprises second mapping information and fourth indication information, the second mapping information indicates a position that is of a time-frequency resource available for transmission of the first reference signal and that corresponds to the second time-frequency resource, and the fourth indication information indicates a position of a time-frequency resource that is actually used for transmission of the first reference signal and that is in the time-frequency resource indicated by the second mapping information.

8. The method according to any one of claims 5 to 7, wherein the first mapping information indicates a pattern of the first reference signal and a pattern of the second reference signal, the pattern of the first reference signal indicates a position of a time-frequency resource that is available for transmission of the first reference signal and that is in a resource grid comprised in the first time domain resource, and the pattern of the second reference signal indicates a position of a time-frequency resource that is available for transmission of the second reference signal and that is in a resource grid comprised in the first time domain resource, wherein
the pattern of the first reference signal is the same as the pattern of the second reference signal; or
the pattern of the first reference signal is different from the pattern of the second reference signal.

9. The method according to claim 8, wherein when the pattern of the first reference signal is different from the pattern of the second reference signal and positions of time-frequency resources available for transmission of the reference signals in the two patterns collide, the first mapping information further comprises a first rule, a second rule, or a third rule, wherein
the first rule indicates to keep the pattern of the first reference signal unchanged, and indicates that a colliding position in the pattern of the second reference signal is unavailable for transmission of the second reference signal;
the second rule indicates to keep the pattern of the second reference signal unchanged, and indicates that a colliding position in the pattern of the first reference signal is unavailable for transmission of the first reference signal; and
the third rule indicates to map the pattern of the first reference signal or the pattern of the second reference signal in a staggered manner, to avoid a collision between positions occupied by all ports supported by two patterns after mapping-based adjustment according to the third rule.

10. The method according to any one of claims 5 to 9, wherein the first reference signal and the second reference signal are demodulation reference signals DMRSs.

11. The method according to any one of claims 3 to 10, wherein the frequency domain resource that is in the first frequency domain resource and that is used for spatial multiplexing transmission of the first type of signal and the second type of signal is contiguous or non-contiguous in frequency domain.

12. A rate matching method, comprising:
sending first indication information and second indication information, wherein the first indication information indicates a first frequency domain resource, the second indication information indicates a second frequency domain resource, and the first frequency domain resource and the second frequency domain resource do not overlap; and
sending first rate matching information associated with the first frequency domain resource and second rate matching information associated with the second frequency domain resource, wherein the first rate matching information indicates a position of a time-frequency resource that is in a first time-frequency resource and that is not used for data transmission, the second rate matching information indicates a position of a time-frequency resource that is in a second time-frequency resource and that is not used for data transmission, the first time-frequency resource comprises a first time domain resource and the first frequency domain resource, and the second time-frequency resource comprises the first time domain resource and the second frequency domain resource.

13. The method according to claim 12, wherein the first frequency domain resource comprises a frequency domain resource used for spatial multiplexing transmission of a first type of signal and a second type of signal, the second frequency domain resource comprises a frequency domain resource used for transmission of the first type of signal, and the first type of signal and the second type of signal are signals of different types.

14. The method according to claim 13, wherein the first rate matching information indicates that no time-frequency resource in the first time-frequency resource is used for data transmission.

15. The method according to claim 13, wherein the first rate matching information indicates a position of a time-frequency resource for transmission of a first reference signal and a second reference signal on the first time-frequency resource, the second rate matching information indicates a position of a time-frequency resource for transmission of the first reference signal on the second time-frequency resource, the first reference signal is the first type of signal, and the second reference signal is the second type of signal.

16. The method according to claim 15, wherein
the first rate matching information comprises first mapping information and third indication information, the first mapping information indicates a position of a time-frequency resource available for transmission of the first reference signal and a position of a time-frequency resource available for transmission of the second reference signal that correspond to the first time-frequency resource, and the third indication information indicates a position of a time-frequency resource actually used for transmission of the first reference signal and a position of a time-frequency resource actually used for transmission of the second reference signal that are in the time-frequency resources indicated by the first mapping information.

17. The method according to claim 15 or 16, wherein
the second rate matching information comprises second mapping information and fourth indication information, the second mapping information indicates a position that is of a time-frequency resource available for transmission of the first reference signal and that corresponds to the second time-frequency resource, and the fourth indication information indicates a position of a time-frequency resource that is actually used for transmission of the first reference signal and that is in the time-frequency resource indicated by the second mapping information.

18. The method according to any one of claims 15 to 17, wherein the first mapping information indicates a pattern of the first reference signal and a pattern of the second reference signal, the pattern of the first reference signal indicates a position of a time-frequency resource that is available for transmission of the first reference signal and that is in a resource grid comprised in the first time domain resource, and the pattern of the second reference signal indicates a position of a time-frequency resource that is available for transmission of the second reference signal and that is in a resource grid comprised in the first time domain resource, wherein
the pattern of the first reference signal is the same as the pattern of the second reference signal; or
the pattern of the first reference signal is different from the pattern of the second reference signal.

19. The method according to claim 18, wherein when the pattern of the first reference signal is different from the pattern of the second reference signal and positions of time-frequency resources available for transmission of the reference signals in the two patterns collide, the first mapping information further comprises a first rule, a second rule, or a third rule, wherein
the first rule indicates to keep the pattern of the first reference signal unchanged, and indicates that a colliding position in the pattern of the second reference signal is unavailable for transmission of the second reference signal;
the second rule indicates to keep the pattern of the second reference signal unchanged, and indicates that a colliding position in the pattern of the first reference signal is unavailable for transmission of the first reference signal; and
the third rule indicates to map the pattern of the first reference signal or the pattern of the second reference signal in a staggered manner, to avoid a collision between positions occupied by all ports supported by two patterns after mapping-based adjustment according to the third rule.

20. The method according to any one of claims 15 to 19, wherein the first reference signal and the second reference signal are demodulation reference signals DMRSs.

21. The method according to any one of claims 13 to 20, wherein the frequency domain resource that is in the first frequency domain resource and that is used for spatial multiplexing transmission of the first type of signal and the second type of signal is contiguous or non-contiguous in frequency domain.

22. A communication apparatus, comprising:
a communication unit, configured to receive first indication information and second indication information, wherein the first indication information indicates a first frequency domain resource, the second indication information indicates a second frequency domain resource, and the first frequency domain resource and the second frequency domain resource do not overlap, wherein
the communication unit is further configured to receive first rate matching information associated with the first frequency domain resource and second rate matching information associated with the second frequency domain resource, wherein the first rate matching information indicates a position of a time-frequency resource that is in a first time-frequency resource and that is not used for data transmission, the second rate matching information indicates a position of a time-frequency resource that is in a second time-frequency resource and that is not used for data transmission, the first time-frequency resource comprises a first time domain resource and the first frequency domain resource, and the second time-frequency resource comprises the first time domain resource and the second frequency domain resource.

23. The apparatus according to claim 22, wherein the communication apparatus further comprises:
a processing unit, configured to perform rate matching on the first time-frequency resource based on the first rate matching information, wherein
the processing unit is further configured to perform rate matching on the second time-frequency resource based on the second rate matching information.

24. The apparatus according to claim 22 or 23, wherein the first frequency domain resource comprises a frequency domain resource used for spatial multiplexing transmission of a first type of signal and a second type of signal, the second frequency domain resource comprises a frequency domain resource used for transmission of the first type of signal, and the first type of signal and the second type of signal are signals of different types.

25. The apparatus according to claim 24, wherein the first rate matching information indicates that no time-frequency resource in the first time-frequency resource is used for data transmission.

26. The apparatus according to claim 24, wherein the first rate matching information indicates a position of a time-frequency resource for transmission of a first reference signal and a second reference signal on the first time-frequency resource, the second rate matching information indicates a position of a time-frequency resource for transmission of the first reference signal on the second time-frequency resource, the first reference signal is the first type of signal, and the second reference signal is the second type of signal.

27. The apparatus according to claim 26, wherein
the first rate matching information comprises first mapping information and third indication information, the first mapping information indicates a position of a time-frequency resource available for transmission of the first reference signal and a position of a time-frequency resource available for transmission of the second reference signal that correspond to the first time-frequency resource, and the third indication information indicates a position of a time-frequency resource actually used for transmission of the first reference signal and a position of a time-frequency resource actually used for transmission of the second reference signal that are in the time-frequency resources indicated by the first mapping information.

28. The apparatus according to claim 26 or 27, wherein
the second rate matching information comprises second mapping information and fourth indication information, the second mapping information indicates a position that is of a time-frequency resource available for transmission of the first reference signal and that corresponds to the second time-frequency resource, and the fourth indication information indicates a position of a time-frequency resource that is actually used for transmission of the first reference signal and that is in the time-frequency resource indicated by the second mapping information.

29. The apparatus according to any one of claims 26 to 28, wherein the first mapping information indicates a pattern of the first reference signal and a pattern of the second reference signal, the pattern of the first reference signal indicates a position of a time-frequency resource that is available for transmission of the first reference signal and that is in a resource grid comprised in the first time domain resource, and the pattern of the second reference signal indicates a position of a time-frequency resource that is available for transmission of the second reference signal and that is in a resource grid comprised in the first time domain resource, wherein
the pattern of the first reference signal is the same as the pattern of the second reference signal; or
the pattern of the first reference signal is different from the pattern of the second reference signal.

30. The apparatus according to claim 29, wherein when the pattern of the first reference signal is different from the pattern of the second reference signal and positions of time-frequency resources available for transmission of the reference signals in the two patterns collide, the first mapping information further comprises a first rule, a second rule, or a third rule, wherein
the first rule indicates to keep the pattern of the first reference signal unchanged, and indicates that a colliding position in the pattern of the second reference signal is unavailable for transmission of the second reference signal;
the second rule indicates to keep the pattern of the second reference signal unchanged, and indicates that a colliding position in the pattern of the first reference signal is unavailable for transmission of the first reference signal; and
the third rule indicates to map the pattern of the first reference signal or the pattern of the second reference signal in a staggered manner, to avoid a collision between positions occupied by all ports supported by two patterns after mapping-based adjustment according to the third rule.

31. The apparatus according to any one of claims 26 to 30, wherein the first reference signal and the second reference signal are demodulation reference signals DMRSs.

32. The apparatus according to any one of claims 24 to 31, wherein the frequency domain resource that is in the first frequency domain resource and that is used for spatial multiplexing transmission of the first type of signal and the second type of signal is contiguous or non-contiguous in frequency domain.

33. A communication apparatus, comprising:
a communication unit, configured to send first indication information and second indication information, wherein the first indication information indicates a first frequency domain resource, the second indication information indicates a second frequency domain resource, and the first frequency domain resource and the second frequency domain resource do not overlap, wherein
the communication unit is further configured to send first rate matching information associated with the first frequency domain resource and second rate matching information associated with the second frequency domain resource, wherein the first rate matching information indicates a position of a time-frequency resource that is in a first time-frequency resource and that is not used for data transmission, the second rate matching information indicates a position of a time-frequency resource that is in a second time-frequency resource and that is not used for data transmission, the first time-frequency resource comprises a first time domain resource and the first frequency domain resource, and the second time-frequency resource comprises the first time domain resource and the second frequency domain resource.

34. The apparatus according to claim 33, wherein the first frequency domain resource comprises a frequency domain resource used for spatial multiplexing transmission of a first type of signal and a second type of signal, the second frequency domain resource comprises a frequency domain resource used for transmission of the first type of signal, and the first type of signal and the second type of signal are signals of different types.

35. The apparatus according to claim 34, wherein the first rate matching information indicates that no time-frequency resource in the first time-frequency resource is used for data transmission.

36. The apparatus according to claim 34, wherein the first rate matching information indicates a position of a time-frequency resource for transmission of a first reference signal and a second reference signal on the first time-frequency resource, the second rate matching information indicates a position of a time-frequency resource for transmission of the first reference signal on the second time-frequency resource, the first reference signal is the first type of signal, and the second reference signal is the second type of signal.

37. The apparatus according to claim 36, wherein
the first rate matching information comprises first mapping information and third indication information, the first mapping information indicates a position of a time-frequency resource available for transmission of the first reference signal and a position of a time-frequency resource available for transmission of the second reference signal that correspond to the first time-frequency resource, and the third indication information indicates a position of a time-frequency resource actually used for transmission of the first reference signal and a position of a time-frequency resource actually used for transmission of the second reference signal that are in the time-frequency resources indicated by the first mapping information.

38. The apparatus according to claim 36 or 37, wherein
the second rate matching information comprises second mapping information and fourth indication information, the second mapping information indicates a position that is of a time-frequency resource available for transmission of the first reference signal and that corresponds to the second time-frequency resource, and the fourth indication information indicates a position of a time-frequency resource that is actually used for transmission of the first reference signal and that is in the time-frequency resource indicated by the second mapping information.

39. The apparatus according to any one of claims 36 to 38, wherein the first mapping information indicates a pattern of the first reference signal and a pattern of the second reference signal, the pattern of the first reference signal indicates a position of a time-frequency resource that is available for transmission of the first reference signal and that is in a resource grid comprised in the first time domain resource, and the pattern of the second reference signal indicates a position of a time-frequency resource that is available for transmission of the second reference signal and that is in a resource grid comprised in the first time domain resource, wherein
the pattern of the first reference signal is the same as the pattern of the second reference signal; or
the pattern of the first reference signal is different from the pattern of the second reference signal.

40. The apparatus according to claim 39, wherein when the pattern of the first reference signal is different from the pattern of the second reference signal and positions of time-frequency resources available for transmission of the reference signals in the two patterns collide, the first mapping information further comprises a first rule, a second rule, or a third rule, wherein
the first rule indicates to keep the pattern of the first reference signal unchanged, and indicates that a colliding position in the pattern of the second reference signal is unavailable for transmission of the second reference signal;
the second rule indicates to keep the pattern of the second reference signal unchanged, and indicates that a colliding position in the pattern of the first reference signal is unavailable for transmission of the first reference signal; and
the third rule indicates to map the pattern of the first reference signal or the pattern of the second reference signal in a staggered manner, to avoid a collision between positions occupied by all ports supported by two patterns after mapping-based adjustment according to the third rule.

41. The apparatus according to any one of claims 36 to 40, wherein the first reference signal and the second reference signal are demodulation reference signals DMRSs.

42. The apparatus according to any one of claims 34 to 41, wherein the frequency domain resource that is in the first frequency domain resource and that is used for spatial multiplexing transmission of the first type of signal and the second type of signal is contiguous or non-contiguous in frequency domain.

43. A communication apparatus, comprising at least one processor and a communication interface, wherein the communication interface is configured to input and/or output a signal, and the at least one processor is configured to execute a computer program stored in a memory, to enable the communication apparatus to implement the method according to any one of claims 1 to 11, or implement the method according to any one of claims 12 to 21.

44. A processing apparatus, comprising a processor, wherein the processor is configured to execute a computer program stored in a memory, to enable the apparatus to implement the method according to any one of claims 1 to 11, or implement the method according to any one of claims 12 to 21.

45. A processing apparatus, comprising:
a memory, configured to store a computer program; and
a processor, configured to: invoke the computer program from the memory, and run the computer program, to enable the apparatus to implement the method according to any one of claims 1 to 11, or implement the method according to any one of claims 12 to 21.

46. A computer-readable medium, comprising a computer program, wherein when the computer program is run on a computer, the computer is enabled to perform the method according to any one of claims 1 to 11, or perform the method according to any one of claims 12 to 21.

47. A computer program product, wherein the computer program product comprises a computer program; and when the computer program is run a computer, the computer is enabled to perform the method according to any one of claims 1 to 11, or perform the method according to any one of claims 12 to 21.
